Europäisches Patentamt

European Patent Office

Office européen des brevets

(11) Veröffentlichungsnummer: **0 425 774 A2**

# (12) EUROPÄISCHE PATENTANMELDUNG

(21) Anmeldenummer: 90114914.6

(22) Anmeldetag: 03.08.90

(30) Priorität: 30.10.89 DE 3936121

(43) Veröffentlichungstag der Anmeldung:
08.05.91 Patentblatt 91/19

(84) Benannte Vertragsstaaten:
**AT CH ES FR GB IT LI SE**

(51) Int. Cl.⁵: **B23B 31/26**, B23B 31/30

(71) Anmelder: **Ott Maschinentechnik GmbH**
**Jägerstrasse 4-12**
**W-8960 Kempten(DE)**

(72) Erfinder: **Bauch, Karl, Dipl.-Ing.**
**An der Letze 35**
**W-8960 Kempten(DE)**

Erfinder: **Raff, Alfred**
**Riedstrasse 10**
**W-8952 Marktoberdorf(DE)**
Erfinder: **Leege, Norbert**
**Krokusweg 9**
**W-8961 Betzigau(DE)**
Erfinder: **Heel, Helmut**
**Andreas-Mayer Strasse 82 1/8**
**W-8951 Lengenwang(DE)**

(74) Vertreter: **Liebau, Gerhard, Dipl.-Ing.**
**Birkenstrasse 39 Postfach 22 02 29**
**W-8900 Augsburg 22(DE)**

(54) **Betätigungsvorrichtung für einen Werkzeug- oder Werkstückspanner in einer Werkzeugmaschinenspindel.**

(57) Die Betätigungsvorrichtung für einen Werkzeug-spanner (1) weist eine in einer Werkzeugmaschinen-spindel (2) unter Wirkung einer Federanordnung (11) in Spannrichtung axial verschiebbare Spannstange (3) und ein zwischen der Spindel und der Spann-stange angreifendes, erstes Keilgetriebe (9) mit frei beweglichen Kugeln auf, die sich jeweils an drei Konusflächen abstützen. Diese sind an einer auf der Spannstange axial verschiebbaren Spannhülse (13) an einem mit der Spannstange (3) verbundenen Spannring (14) und an einem gegenüber der Spindel stationär angeordneten Widerlagerring (13) vorgese-hen. Die Federanordnung (11) wirkt über eine auf der Spannstange axial verschiebbare Druckhülse (12) ein. Zwischen Druckhülse (12) und Spannhülse (13) ist ein zweites Keilgetriebe (10) mit frei begli-chen Kugeln vorgesehen, die sich jeweils an zwei entgegengesetzt zueinander geneigten Konusflächen an den einander zugekehrten Stirnseiten der beiden Hülsen (12,13) und nacheinander an zwei weiteren entgegengesetzt zueinander geneigten Konusflächen des Widerlagerringes (15) abstützen. Eine Kolben-Zylinder-Einheit (7; 8) wirkt beim Lösehub entgegen der Spannrichtung zunächst auf die Spannhülse (13) und dann auch auf einen Ringabsatz (3a) der Spann-stange ein.

FIG. 1

# BETÄTIGUNGSVORRICHTUNG FÜR EINEN WERKZEUG- ODER WERKSTÜCKSPANNER IN EINER WERK-ZEUGMASCHINENSPINDEL

Die Erfindung betrifft eine Betätigungsvorrichtung für einen Werkzeug- oder Werkstückspanner in einer Werkzeugmaschinenspindel, mit einer in der Spindel unter Wirkung einer Federanordnung in Spannrichtung axial verschiebbaren Spannstange und einem zwischen der Spindel und der Spannstange angreifenden, ersten Keilgetriebe mit frei beweglichen Kugeln, die sich jeweils an drei Konusflächen abstützen, von denen die eine Konusfläche an einer auf der Spannstange axial verschiebbaren Spannhülse, die andere Konusfläche an einem mit der Spannstange verbundenen Spannring und die dritte Konusfläche an einem gegenüber der Spindel stationär angeordneten Widerlagerring vorgesehen ist, mit einer zwischen Federanordnung und Spannhülse auf der Spannstange axial verschiebbaren Druckhülse, die in Spannrichtung auf die Spannhülse einwirkt, und mit einer Kolben-Zylinder-Einheit, deren Kolben in einer ersten Phase seines entgegen der Spannrichtung gerichteten Lösehubes zunächst auf die Spannhülse und in einer zweiten Phase auch auf einen Ringabsatz der Spannstange einwirkt.

Bei einer bekannten Betätigungsvorrichtung dieser Art (Prospekt der Firma A. Ott, Kempten "Mit Präzision zum Erfolg, Ott-Werkzeugspanner", Ausgabe 1986, Seite 3) dient das Keilgetriebe dazu, beim Spannen die von der Federanordnung auf die Spannstange wirkende Kraft zu verstärken, um damit die Einzugskraft (Spannkraft) des Werkzeug- oder Werkstückspanners zu vergrößern. Außerdem dient das Keilgetriebe auch dazu, die Spannstange gegenüber der Spindel in gespanntem Zustand zu verriegeln, damit bei Ausfall der Federanordnung, z.B. durch Federbruch, oder auch bei entgegengesetzt der Spannrichtung auf das Werkzeug oder das Werkstück wirkenden erhöhten Auszugskräften das von dem Spanner gespannte Teil sicher gehalten wird. Die Kolben-Zylinder-Einheit dient bei dieser bekannten Betätigungsvorrichtung nicht nur zum Spannen der Federanordnung und zum Öffnen der am vorderen Ende der Spannstange angeordneten Spannzange, sondern auch zum Ausstoß des Werkzeuges aus der Spindel. Da ein großer Teil der von der Kolben-Zylinder-Einheit aufgebrachten Kraft zum Spannen der Federanordnung gebraucht wird, steht nur ein Teil dieser Kraft zum Ausstoßen des Werkzeuges zur Verfügung. Bei Steilkegelwerkzeugen tritt nun das Problem auf, daß sich bei hohen Spindeldrehzahlen der Aufnahmekegel der Spindel aufweitet und das Werkzeug unter Wirkung der Federanordnung weiter in den Aufnahmekegel eingezogen wird. Beim Ausstoßen ist deshalb ein Schrumpfsitz zu überwinden. Außerdem werden bei hohen Spindeldrehzahlen die Kugeln durch die Fliehkraft in den keilförmigen Ringspalt zwischen den Konusflächen von Widerlagerring und Spannring gedrückt und hierdurch die Einzugskraft ungewollt erhöht. Zum Ausstoßen ist dann ebenfalls eine höhere Ausstoßkraft erforderlich. Zur Erzeugung dieser höheren Ausstoßkraft ist eine entsprechend groß dimensionierte Kolben-Zylinder-Einheit und/oder hoher Betriebsdruck hierfür erforderlich. Wird eine Vergrößerung der Einzugskraft gewünscht, so ist dies nur durch eine Vergrößerung der Federanordnung möglich, die wiederum eine Vergrößerung der Kolben-Zylinder-Einheit oder des Betriebsdruckes erforderlich macht.

Der Erfindung liegt deshalb die Aufgabe zugrunde, eine Betätigungsvorrichtung für einen Werkzeug- oder Werkstückspanner der eingangs genannten Art zu schaffen, die ohne Vergrößerung der Bauabmessungen eine erhöhte Ausstoß-und Einzugskraft aufweist.

Dies wird nach der Erfindung dadurch erreicht, daß zwischen Druckhülse und Spannhülse ein zweites Keilgetriebe mit frei beweglichen Kugeln vorgesehen ist, die sich jeweils an zwei entgegengesetzt zueinander geneigten Konusflächen an den einander zugekehrten Stirnseiten der bei den Hülsen und nacheinander an zwei weiteren entgegengesetzt zueinander geneigten Konusflächen eines gegenüber der Spindel stationär konzentrisch zu den Hülsen angeordneten Ringes abstützen, wobei die der Federanordnung zugekehrte, erste Konusfläche sich zur Federanordnung und die der Spannhülse zugekehrte zweite Konusfläche sich zu dem Spannring hin konisch erweitert, derart, daß sich die Kugeln des zweiten Keilgetriebes zu Beginn des von der Federanordnung bewirkten Spannhubes der Druckhülse an der ersten Konusfläche abstützen und wegübersetzend auf die Spannhülse einwirken, in einer zweiten Phase des Spannhubes an der zweiten Konusfläche abstützen und dadurch in der zweiten Phase des Spannhubes kraftverstärkend auf die Spannhülse einwirken und in der letzten Phase des von der Kolbenzylinder-Einheit bewirkten, entgegengesetzt gerichteten Lösehubes wieder an der ersten Konusfläche abstützen und dadurch kraftverstärkend auf die Druckhülse in Richtung auf die Federanordnung einwirken.

Während der zweiten Phase des Spannhubes wird die Federkraft ein erstes Mal durch das zweite Keilgetriebe verstärkt, indem dessen Kugeln auf die Spannhülse drücken. Die Spannhülse drückt ihrerseits die Kugeln des ersten Keilgetriebes zwischen die Konusflächen am Spannring und am Widerlagerring, wodurch eine zweite Kraftübersetzung stattfindet. Hierdurch wird die Federkraft zweimal übersetzt,und die Spannstange zieht das Werkzeug oder Werkstück mit erhöhter Einzugskraft in die Spindel. Beim Lösehub des Kolbens gelangen die Kugeln wieder in den Bereich der ersten Konusfläche des zweiten Keilgetriebes, wodurch eine Kraftverstärkung der Kolbenkraft in Richtung auf die Federanordnung stattfindet. Hierdurch ist nur noch ein kleiner Teil der Kolbenkraft erforderlich, um das Federpaket die letzten Zehntel Millimeter vorzuspannen. Durch den geringen Kraftbedarf zur Federvorspannung verbleibt mehr Kolbenkraft zum Ausstoßen des Werkzeuges. Ein weiterer Vorteil der neuen Betätigungsvorrichtung besteht darin, daß sie gegenüber der bekannten Betätigungsvorrichtung keinen zusätzlichen Platz erfordert. Infolgedessen ist es auch möglich, bereits vorhandene Betätigungsvorrichtungen mit Teilen der neuen Betätigungsvorrichtung umzurüsten, um so auch bei bereits vorhandenen Betätigungsvorrichtungen eine erhöhte Ausstoß- und Einzugskraft zu erreichen.

Vorteilhafte Ausgestaltungen der Erfindung sind in den Unteransprüchen gekennzeichnet.

Die Erfindung ist in folgendem anhand eines in der Zeichnung dargestellten Ausführungsbeispiels näher erläutert.

Es zeigen:

Figur 1 einen kompletten Werkzeugspanner im Längsschnitt,

Figur 2 einen Teillängsschnitt der Betätigungsvorrichtung in der Startphase des Spannhubes bzw. der Endphase des Lösehubes,

Figur 3 einen Teillängsschnitt der Betätigungsvorrichtung in einer Zwischenposition,

Figur 4 einen Teillängsschnitt der Betätigungsvorrichtung in der Endposition des Spannhubes bzw. der Startposition des Lösehubes.

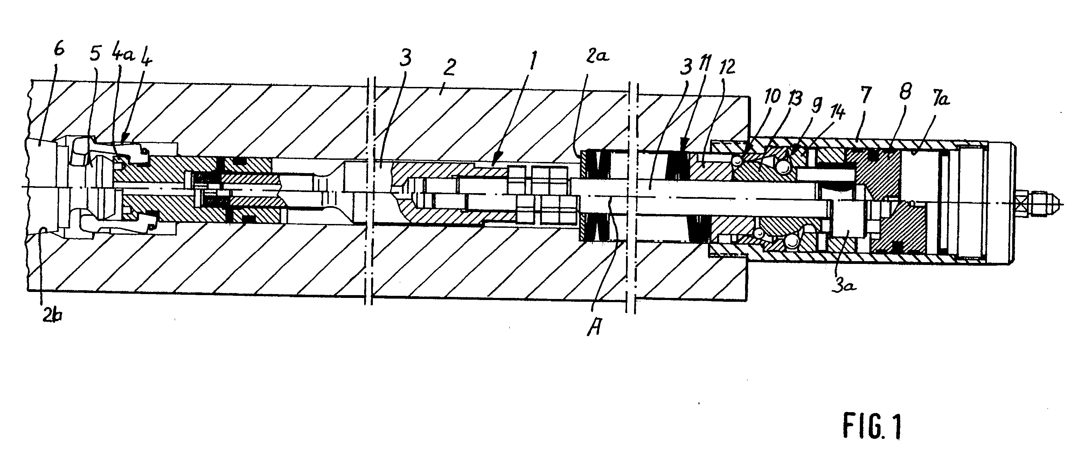

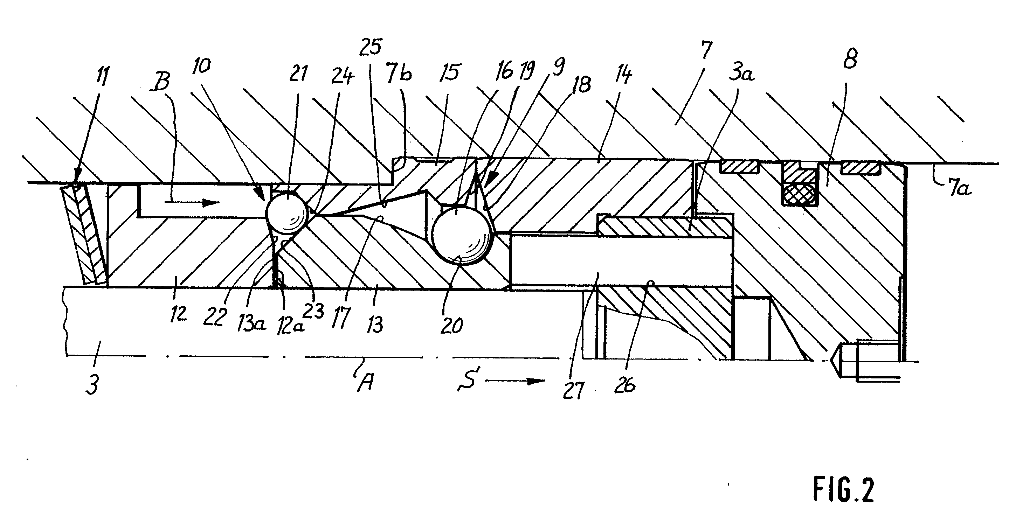

In Figur 1 ist ein kompletter Werkzeugspanner 1 dargestellt, der in eine Werkzeugmaschinenspindel 2 eingebaut ist. In der oberen Hälfte der Figur 1 ist der Werkzeugspanner in seiner Lösestellung und in der unteren Hälfte in seiner Spannstellung gezeigt. Die Spannstange 3 ist in Richtung ihrer Achse A axial gegenüber der Spindel 2 verschiebbar und trägt an ihrem werkzeugseitigen Ende eine Spannzange 4, die beispielsweise an dem Anzugsbolzen 5 eines Werkzeuges mit Steilkegelschaft 6 angreift. Es ist ferner ein in die Spindel 2 fest einschraubbares Zylindergehäuse 7 vorgesehen, welches eine hydraulische Kolben-Zylinder-Einheit mit einem in dem Zylinder 7a verschiebbaren Kolben 8 enthält. In dem Zylindergehäuse 7 sind ferner ein erstes Keilgetriebe 9 und ein zweites Keilgetriebe 10 angeordnet, deren Aufbau und Wirkungsweise anhand der Figuren 2 - 4 noch näher erläutert werden. Die Spannstange 3 ist ferner von einer Federanordnung 11 umgeben, die aus einer Vielzahl von Tellerfedern besteht. Die Federanordnung 11 stützt sich einerseits an einem Absatz 2a der Spindel 2 und andererseits an einer auf der Spannstange 3 axial verschiebbaren Druckhülse 12 ab.

Zu dem ersten Keilgetriebe 9 gehören eine auf der Spannstange 3 axial verschiebbare Spannhülse 13, ein mit der Spannstange 3 über deren Ringabsatz 3a fest verbundener Spannring 14, ein an einem Ringabsatz 7b abgestützter und fest in das Zylindergehäuse 7 eingebauter Widerlagerring 15 sowie mehrere frei bewegliche Kugeln 16, die sich jeweils an drei Konusflächen 17, 18 , 19 abstützen. Die eine Konusfläche 17 ist an der Spannhülse 13, die andere Konusfläche 18 am Spannring 14 und die dritte Konusfläche 19 am Widerlagerring 15 vorgesehen. Die Spannhülse 13 weist ferner eine Parkrille 20 für die Kugeln 16 auf. Das zweite Keilgetriebe 10, welches zwischen dem Druckring 12 und der Spannhülse 13 vorgesehen ist, weist ebenfalls mehrere frei bewegliche Kugeln 21 auf, die sich an einer Konusfläche 22 des Druckringes, einer Konusfläche 23 der Spannhülse 13 und nacheinander an einer ersten Konusfläche 24 und einer zweiten Konusfläche 25 abstützen. Die Konusflächen 24, 25 sind vorteilhaft an dem Widerlagerring 15 in einem zwischen der dritten Konusfläche 19 und der Federanordnung 11 liegenden Bereich desselben vorgesehen. Gegebenenfalls könnten die beiden Konusflächen 24, 25 auch an einem separaten, stationär in dem Spindelgehäuse 7 eingesetzten Ring angeordnet sein. Die erste Konusfläche 24 und die zweite Konusfläche 25 sind entgegengesetzt zueinander geneigt, wobei sich die erste Konusfläche 24 zu der Federanordnung 11 hin konisch erweitert und die der Spannhülse 13 zugekehrte zweite Konusfläche sich zu dem Spannring 14 hin konisch erweitert. Die an den Stirnflächen 12a bzw. 13a der Druckhülse 12 bzw. der Spanhülse 13 vorgesehenen Konusflächen 22 bzw. 23 sind ebenfalls entgegengesetzt zueinander geneigt. Der Ringabsatz 3a der Zugstange 3 weist ferner mehrere Axialbohrungen 26 auf, in denen Druckbolzen 27 verschiebbar sind, die einerseits am Kolben 8 und andererseits an der Spannhülse 13 anliegen.

Zu Beginn des Spannhubes nehmen die Teile der Betätigungsvorrichtung die in Figur 2 dargestellte Position ein. Die Spannzange 4 ist geöffnet, wie es in Figur 1 oben dargestellt ist. Wird nun der im Zylinder 7a herrschende Druck aufgehoben, dann schiebt die Federanordnung 11 die Druckhülse 12 in Richtung B nach rechts. Unter Wirkung ihrer Konusfläche 22 werden die Kugeln 21 an der ersten Konusfläche 24 des Widerlagerringes 15 radial nach innen bewegt. Die Kugeln 21 drücken auf die Konusfläche 23 der Spannhülse 13 . In dieser ersten Phase des Spannhubes der Druckhülse 12 findet eine Wegübersetzung statt, d.h. die Spannhülse 13 bewegt sich um einen größeren Weg nach rechts als die Druckhülse 12. Bei der Bewegung der Spannhülse 13 nach rechts kommen die Kugeln 16 an der Konusfläche 18 des Spannringes 14 zur Anlage und drücken diesen ebenfalls nach rechts. Durch den Spannring 14 wird die Spannstange 3 in Spannrichtung S nach rechts gedrückt, wodurch sich die Spannzange 4 schließt und das Werkzeug mittels des Anzugsbolzens 5 zunächst mit geringer Kraft in den Aufnahmekegel 2b der Spindel 2 einzieht.

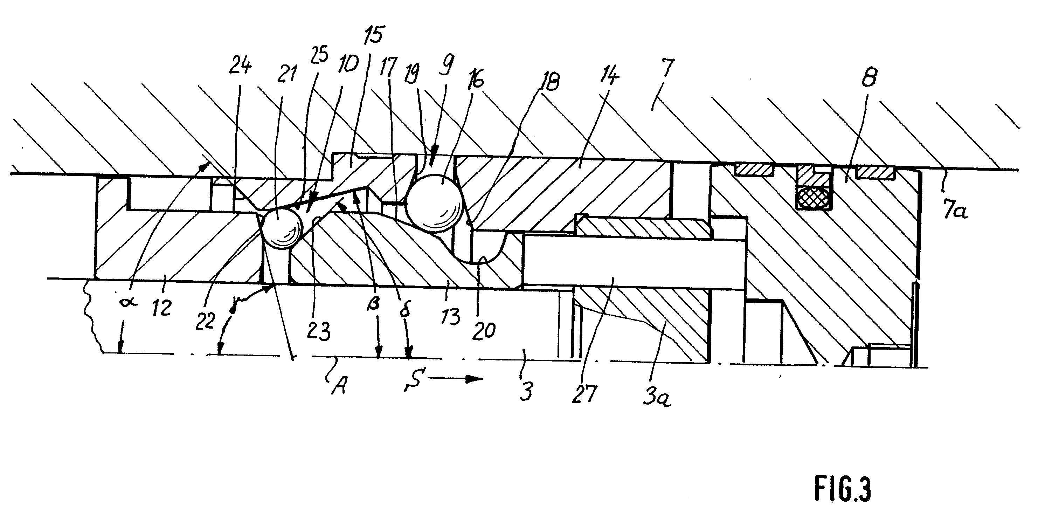

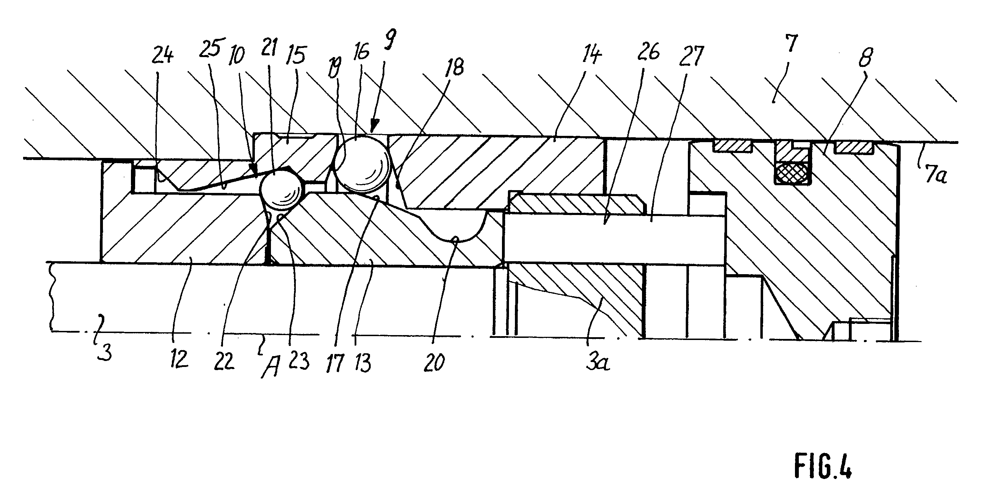

Nachdem die Kugeln 21 die radial engste Stelle des Widerlagerringes 15 passiert haben, stützen sie sich nunmehr an der zweiten Konusfläche 25 des Widerlagerringes 15 ab, wie es in Figur 3 dargestellt ist. Da die zweite Konusfläche 25 entgegengesetzt zur ersten Konusfläche 24 geneigt ist, erfolgt nunmehr eine Kraftübersetzung. Die Federanordnung 11 drückt die Kugeln 21 in den sich keilförmig verjüngenden Ringspalt zwischen den Konusflächen 23 und 25, und die in der Federanordnung gespeicherte Axialkraft wird mit Kraftübersetzung an die Spannhülse 13 weitergegeben. Die Spannhülse 13 drückt nunmehr mit ihrer Konusfläche 17 die Kugeln 16 in den sich keilförmig verjüngenden Ringspalt zwischen den Konusflächen 18 und 19. Hierdurch erfolgt eine zweite Kraftübersetzung. Die sich am Spannring 14 abstützenden Kugeln 16 drücken nunmehr den Spannring 14 und damit die fest mit ihm verbundene Spannstange 3 mit großer Kraft in Spannrichtung S nach rechts,und das Werkzeug wird nunmehr mit hoher Einzugskraft, die wesentlich höher ist als die von der Federanordnung 11 erzeugte Axialkraft, in den Aufnahmekegel 2b eingezogen. Da sich die Spannhülse 13 während des Spannhubes auf der Zugstange 3 verschiebt, wird der Kolben 8 durch die Druckbolzen 27 nach rechts verschoben und entfernt sich dabei vom Ringabsatz 3a. Am Ende des Spannhubes nehmen die Teile der Betätigungsvorrichtung die in Figur 4 dargestellte Position ein.

Diese Position ist gleichzeitig die Anfangsposition des Lösehubes. Soll das Werkzeug gelöst und aus der Spindel 2 ausgestoßen werden, dann wird der Zylinder 7a mit Druck beaufschlagt. Der Kolben 8 schiebt über die Druckbolzen 27 die Spannhülse 13 entgegen der Spannrichtung S nach links. Ihre Konusfläche 23 drückt auf die Kugeln 21, die ihrerseits die Druckhülse 12 nach links drücken. Da die zweite Konusfläche 25, an der sich die Kugeln 21 abstützen, bei dieser Bewegung nach links radial nach innen verengt, findet während der ersten Phase des Lösehubes eine Wegübersetzung zwischen der Spannhülse 13 und der Druckhülse 12 statt, d.h. die Druckhülse 12 bewegt sich in dieser ersten Phase des Lösehubes um einen größeren Weg nach links als die Spannhülse 13. Durch die Druckhülse 12 wird die Federanordnung 11 vorgespannt. Während der ersten Phase des Lösehubes kommt der Kolben 8 auch an dem Ringabsatz 3a der Zugstange 3 zur Anlage. Die Spannhülse 13 wird während der ersten Phase des Lösehubes so weit nach links verschoben, daß die Kugeln 16 in die Parkrille 20 gelangen. Sobald der Kolben 8 am Ringabsatz 3a anliegt, wird die Zugstange 3 zusammen mit dem Spannring 14 und der Spannhülse 13 nach links weitergeschoben, bis die Spannzange 4 den Anzugsbolzen 5 freigibt und der Zangenhalter 4a auf den Anzugsbolzen 5 drückt, wie es in Figur 1 oben dargestellt ist. Kurz bevor der Zangenhalter 4a den Anzugsbolzen 5 berührt, haben die Kugeln 21 die engste Stelle des Widerlagerringes 15 passiert,und sie stützen sich nunmehr an der ersten Konusfläche 24 ab. Die Konusfläche 23 der Spannhülse 13 drückt nunmehr die Kugeln 21 in den keilförmigen Ringspalt zwischen den Konusflächen 22 und 24. Hierdurch erfolgt eine Kraftverstärkung der vom Kolben 8 erzeugten Kraft,und die Druckhülse 12 wird nunmehr unter Wirkung dieser Kraftverstärkung weiter nach links gedrückt. Um die Federanordnung 11 die letzten Zehntel Millimeter vorzuspannen, ist dank der Kraftverstärkung ein geringerer Kraftbedarf erforderlich, um die Spannhülse 13 nach links zu drücken. Infolge dieses geringeren Kraftbedarfs zur Vorspannung der Federanordnung 11 verbleibt ein größerer Teil der Kolbenkraft zum Ausstoßen des Werkzeuges. Dieses Ausstoßen des Werkzeuges erfolgt während der letzten Phase des Lösehubes des Kolbens 8, wenn der Zangenhalter 4a auf den Anzugsbolzen 5 drückt.

Der Neigungswinkel $\alpha$ der ersten Konusfläche 24 gegenüber der Spannstangenachse A kann 15° - 75° betragen und sollte vorzugsweise etwa 45° sein. Der Neigungswinkel $\beta$ der zweiten Konusfläche 25 gegenüber der Spannstangenachse A kann 10° - 30° betragen und sollte vorzugsweise etwa bei 20° liegen. Der Neigungswinkel $\gamma$ der an der Druckhülse 13 vorgesehenen Konusfläche 22 gegenüber der Spannstangenachse A kann im Bereich zwischen 45° - 90° liegen und sollte vorzugsweise etwa 75° betragen. Der Neigungswinkel $\delta$ der an der Spannhülse 13 vorgesehenen Konusfläche des zweiten Keilgetriebes 10 gegenüber der Spannstangenachse A sollte zwischen 15° - 75° liegen und vorzugsweise etwa 45° betragen.

## Ansprüche

1. Betätigungsvorrichtung für einen Werkzeug- oder Werkstückspanner in einer Werkzeugmaschinenspindel, mit einer in der Spindel unter Wirkung einer Federanordnung in Spannrichtung axial verschiebbaren Spannstange und einem zwischen der Spindel und der Spannstange angreifenden, ersten Keilgetriebe mit frei beweglichen Kugeln, die sich jeweils an drei Konusflächen abstützen, von denen die eine Konusfläche an einer auf der Spannstange axial verschiebbaren Spannhülse, die andere Konusfläche an einem mit der Spannstange verbundenen Spannring und die dritte Konusfläche an einem gegenüber der Spindel stationär angeordneten Widerlagerring vorgesehen ist, mit einer zwischen Federanordnung und Spannhülse auf der Spannstange axial verschiebbaren Druckhülse, die in Spannrichtung auf die Spannhülse einwirkt, und mit einer Kolben-Zylinder-Einheit, deren Kolben in einer ersten Phase seines entgegen der Spannrichtung gerichteten Lösehubes zunächst auf die Spannhülse und in einer zweiten Phase auch auf einen Ringabsatz der Spannstange einwirkt, dadurch gekennzeichnet, daß zwischen Druckhülse (12) und Spannhülse (13) ein zweites Keilgetriebe (10) mit frei beweglichen Kugeln (21) vorgesehen ist, die sich jeweils an zwei entgegengesetzt zueinander geneigten Konusflächen (22, 23) an den einander zugekehrten Stirnseiten (12a, 13a) der beiden Hülsen (12, 13) und nacheinander an zwei weiteren entgegengesetzt zueinander geneigten Konusflächen (24, 25) eines gegenüber der Spindel (2) stationär, konzentrisch zu den Hülsen (12, 13) angeordneten Ringes (15) abstützen, wobei die der Federanordnung (11) zugekehrte, erste Konusfläche (24) sich zur Federanordnung und die der Spannhülse (13) zugekehrte zweite Konusfläche (25) sich zu dem Spannring (14) hin konisch erweitert, derart, daß sich die Kugeln (21) des zweiten Keilgetriebes (10) zu Beginn des von der Federanordnung (11) bewirkten Spannhubes der Druckhülse (12) an der ersten Konusfläche (24) abstützen und wegübersetzend auf die Spannhülse (13) einwirken, in einer zweiten Phase des Spannhubes an der zweiten Konusfläche (25) abstützen und dadurch in der zweiten Phase des Spannhubes kraftverstärkend auf die Spannhülse (13) einwirken und in der letzten Phase des von der Kolben-Zylinder-Einheit (7a, 8) bewirkten, entgegengesetzt gerichteten Lösehubes wieder an der ersten Konusfläche (24) abstützen und dadurch kraftverstärkend auf die Druckhülse (12) in Richtung auf die Federanordnung (11) einwirken.

2. Betätigungsvorrichtung nach Anspruch 1, dadurch gekennzeichnet, daß die erste und die zweite Konusfläche (24, 25) des zweiten Keilgetriebes (10) an dem Widerlangerring (15) in einem zwischen der dritten Konusfläche (19) und der Federanordnung (11) liegenden Bereich desselben vorgesehen sind.

3. Betätigungsvorrichtung nach Anspruch 1 oder 2, dadurch gekennzeichnet, daß der Neigungswinkel ($\alpha$) der ersten Konusfläche (24) gegenüber der Spannstangenachse (A) $15^0$ - $75^0$ , vorzugsweise etwa $45^0$ beträgt.

4. Betätigungsvorrichtung nach einem der vorhergehenden Ansprüche, dadurch gekennzeichnet, daß der Neigungswinkel ($\beta$) der zweiten Konusfläche (25) gegenüber der Spannstangenachse (A) $10^0$ - $30^0$ , vorzugsweise etwa $20^0$ beträgt.

5. Betätigungsvorrichtung nach einem der vorhergehenden Ansprüche, dadurch gekennzeichnet, daß der Neigungswinkel ($\gamma$) der an der Druckhülse (12) vorgesehenen Konusfläche (22) gegenüber der Spannstangenachse (A) $45^0$ - $90^0$ , vorzugsweise etwa $75^0$ beträgt.

6. Betätigungsvorrichtung nach einem der vorhergehenden Ansprüche, dadurch gekennzeichnet, daß der Neigungswinkel ($\delta$) der an der Spannhülse (13) vorgesehenen Konusfläche (23) des zweiten Keilgetriebes (10) gegegenüber der Spannstangenachse (A) $15^0$ - $75^0$, vorzugsweise etwa $45^0$ beträgt.

FIG. 1

EP 0 425 774 A2

11 B 10 25 21 24 7b 15 16 19 9 7 3a 8

FIG.2

12 22 13a 12a 23 17 13 20

3 A S 27 26

7a

EP 0 425 774 A2

FIG.3

EP 0 425 774 A2

FIG.4

EP 0 425 774 A2